# EUROPÄISCHE PATENTANMELDUNG

(11) **EP 1 475 283 A1**
(43) Veröffentlichungstag der Anmeldung: **10.11.2004**
(21) Anmeldenummer: 04002977.9
(22) Anmeldetag: 11.02.2004
(51) Int. Cl.: B60R 22/46

(54) **Anzündeeinheit für ein Sicherheitssystem eines Fahrzeuges**

(30) Priorität: 07.05.2003 DE 10320193
(71) Anmelder: Hirschmann Automotive GmbH, 6830 Rankweil-Brederis (AT)
(72) Erfinder: Schmid, Günther, 6832 Röthis (AT)
(74) Vertreter: Thul, Hermann, Dipl.-Phys.

(57) **Zusammenfassung**

Anzündeinheit (1) für ein Sicherheitssystem, insbesondere ein Airbag oder ein Gurtstraffer, eines Fahrzeuges, mit einer in einem Gehäuse (5) angeordneten Zündpille (3) die nach ihrer Zündung zumindest eine weitere Treibladung zündet, wobei erfindungsgemäß vorgesehen ist, daß die Treibladung derart in einem Raum (8) in dem Gehäuse (5) angeordnet ist, daß sie nach ihrer Zündung eine Rückstoßkraft (10) in Richtung der Zündpille (3) erzeugt.

## Beschreibung

Die Erfindung betrifft eine Anzündeinheit für ein Sicherheitssystem, insbesondere ein Airbag oder ein Gurtstraffer, eines Fahrzeuges gemäß den Merkmalen des Obergriffes des Patentanspruches 1.

Anzündeinheiten für Sicherheitssysteme sind grundsätzlich bekannt. Diese Anzündeinheiten weisen eine sogenannte Zündpille auf, die über elektrische Zuleitungen mit einem Steuergerät verbunden ist, welches im Crashfall die Zündpille zündet. Die Explosion der Zündpille wirkt auf eine Treibladung, die ihrerseits zur Zündung kommt und den gefalteten Sack eines Airbags aufbläst oder ein Antriebselement, zum Beispiel einen Kolben, zur Straffung des Gurtes antreibt. Dabei ist die Zündpille derart in einem Gehäuse angeordnet, daß sie eine Kraft in eine bestimmte Richtung, nämlich in Richtung der Treibladung erzeugt. Dadurch wird die Treibladung selber gezündet, wobei sie ihre Kraft in die gleiche Richtung entfaltet wie die Zündpille ihre Kraft entfaltet hat. D.h., daß die Explosionsrichtung der Zündpille die gleiche ist wie die Explosionsrichtung der Treibladung. Das hat aber den Nachteil, da sich die explodierende Treibladung in Richtung eines freien Raumes bewegt, daß diese beim Explodieren nicht vollständig verbrennen kann. Daher ist es erforderlich, die Menge der Treibladung zu vergrößern, um auch unter Berücksichtigung des nicht verbrannten Teiles der Treibladung die erforderliche Stoßkraft erzeugen zu können.

Der Erfindung liegt die Aufgabe zugrunde, eine Anzündeinheit für ein Sicherheitssystem eines Fahrzeuges bereitzustellen, mit der unter Beibehaltung der erforderlichen Stoßkraft die Menge der Treibladung verringert werden kann.

Diese Aufgabe ist durch die Merkmale des Patentanspruchs 1 gelöst.

Erfindungsgemäß ist vorgesehen, daß die Treibladung derart in einem Raum in dem Gehäuse der Anzündeinheit angeordnet ist, daß sie nach ihrer Zündung eine Rückstoßkraft in Richtung der Zündpille erzeugt. Das bedeutet, daß, nachdem die Zündpille gezündet wurde, diese eine Kraft in eine bestimmte Richtung, nämlich in Richtung der Treibladung erzeugt. Im Anschluß daran zündet auch die Treibladung selber, die aber nun in einem definierten Raum angeordnet ist, so daß sie vollständig zünden bzw. verbrennen kann, damit die Verbrennung nur in dem definierten Raum vollständig erfolgen kann, um somit eine Rückstoßkraft in Richtung der Zündpille zu erzeugen, wobei diese Rückstoßkraft entgegengerichtet ist zu der Explosionsrichtung der Zündpille. Im Gegensatz zu bekannten Anzündeinheiten erfolgt also hier die Verbrennung der Treibladung in einem fest vorgegebenen Raum, der nur eine kleine Öffnung hat, über die die Rückstoßkraft erzeugt wird. Damit ist der für die Verbrennung zur Verfügung stehende Raum begrenzt, so daß in diesem begrenzten Raum die Verbrennung vollständig erfolgen kann, so daß in diesem Raum nur diejenige Menge an Treibladung eingefülllt werden muß, die zur Erzeugung der erforderlichen Rückstoßkraft nötig ist.

Im Falle eines Gurtstraffers ist in erfindungsgemäßer Weise vorgesehen, daß die Treibladung in einem Raum des Antriebselementes angeordnet ist. Bei diesem Antriebselement handelt es sich beispielsweise um einen Kolben, der in dem Gehäuse der Anzündeinheit gelagert ist. Wenn nun die Zündpille gezündet hat und die Treibladung zur Explosion gebracht hat, vollführt das Antriebselement zum Beispiel eine Linearbewegung (wobei auch andersförmige Bewegungen denkbar sind) und zieht den Gurt straff.

Weitere Ausgestaltungen der Erfindung sind in den Unteransprüchen angegeben, im folgenden beschrieben und anhand der Figuren erläutert.

Es zeigen
- Figur 1: die Gesamtansicht einer Anzündeinheit,
- Figur 2: Schnitt einer Anzündeinheit im nicht gezündeten Zustand,
- Figur 3: Ansicht der Anzündeinheit von unten im nicht gezündeten Zustand,
- Figur 4: Querschnitt durch die Anzündeinheit,
- Figur 5: Längsschnitt durch die Anzündeinheit kurz nach der Zündung der Treibladung.

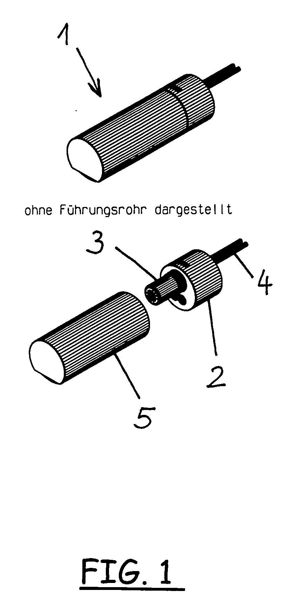

Figur 1 zeigt den beispielhaften Aufbau einer Anzündeinheit 1, die insbesondere für die Verwendung bei einem Gurtstraffer-Sicherheitssystem vorgesehen ist. Diese Anzündeinheit 1 besteht aus einem Grundgehäuse 2, welches die Zündpille 3 aufnimmt. Aus dem Grundgehäuse 2 ragen elektrische Zuleitungen 4 heraus, über welche die Zündpille 3 mit einem zugehörigen Steuergerät verbunden ist. Weiterhin ist ein Gehäuse 5 vorgesehen, daß die Zündpille 3 abdeckt und außerdem eine von der Zündpille 3 zu zündende Treibladung (oder auch mehrere) umgibt. Bei der Treibladung kann es sich beispielsweise um ein Granulat, um Tabletten, eine kornförmige Treibladung oder dergleichen handelt.

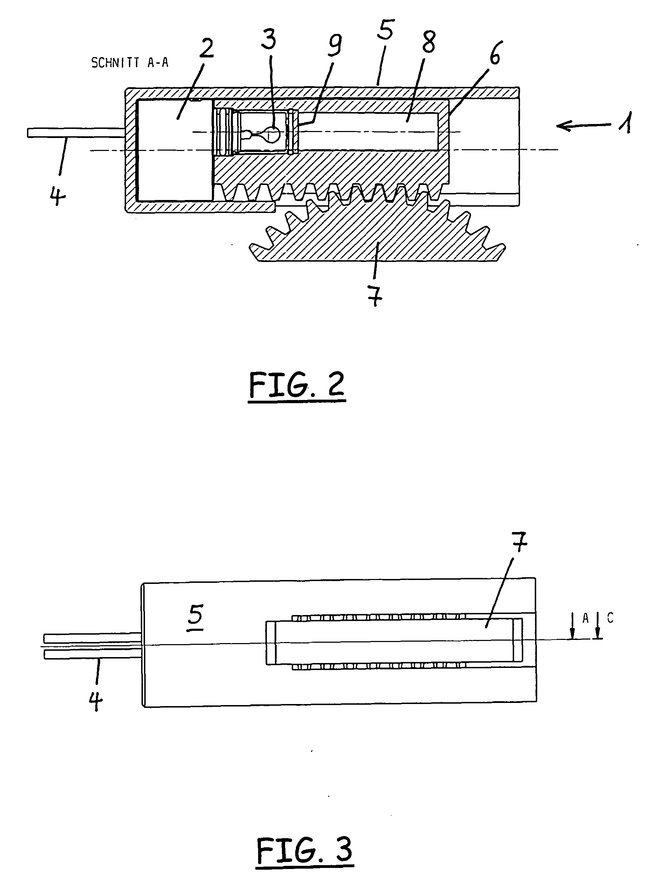

Figur 2 zeigt einen Längsschnitt durch die Anzündeinheit 1, wobei beispielhaft die Lage des Grundgehäuses 2, der Zündpille 3 und der elektrischen Zuleitungen in dem Gehäuse 5 erkennbar ist. Zusätzlich ist in dem Gehäuse 5 ein insbesondere kolbenförmiges Antriebselement 6 angeordnet, was auf ein Abtriebselement 7 wirkt. Das Antriebselement 6 und das Abtriebselement 7 sind hierbei zahnradförmig ausgestaltet, wobei auch andere Ausführungsformen denkbar sind. So kann beispielsweise an dem Antriebselement 6 auch ein Stahlseil befestigt sein, welches im Crashfall den Gurt strafft. Innerhalb des Gehäuse 5, insbesondere innerhalb des Antriebselementes 6 bei diesem Ausführungsbeispiel ist ein Raum 8 für eine Treibladung vorhanden. Dieser insbesondere rohrförmige Raum 8 ist von dem Antriebselement 6 nahezu vollständig umschlossen, mit Ausnahme einer Öffnung in Richtung der Zündpille 3. Diese Öffnung wird in vorteilhafter Weise nach dem Befüllen des Raumes 8 mit der Treibladung verschlossen, wobei der Verschluß beispielsweise als einzusetzende Scheibe ausgebildet sein kann. In besonders vorteilhafter Weise ist dieser Verschluß als Düse, und die Düse insbesondere als Lochscheibe ausgebildet, damit über diese als Düse ausgebildeten Verschluß nicht nur die Zündung der Treibladung in dem Raum 8 von der Zündpille 3 möglich ist, sondern darüber hinaus der Rückstoß, der von dem Zünden der Treibladung erzeugt wird, konzentriert in Richtung der Zündpille 3 erfolgen kann, da die explodierte Zündpille 3 bzw. deren Grundgehäuse 2 ein festes Ende darstellen. Wie in Figur 2 erkennbar, ist auch die Zündpille 3 ebenfalls in dem Raum 8 angeordnet, so daß die Wirkung der explodierenden Zündpille 3 voll in Richtung der Treibladung ausgerichtet ist.

Figur 3 zeigt die Unteransicht von der Anzündeinheit 1, wobei erkennbar ist, daß aus dem Gehäuse das Antriebselement 6 herausragt und auf das Abtriebselement 7 wirkt.

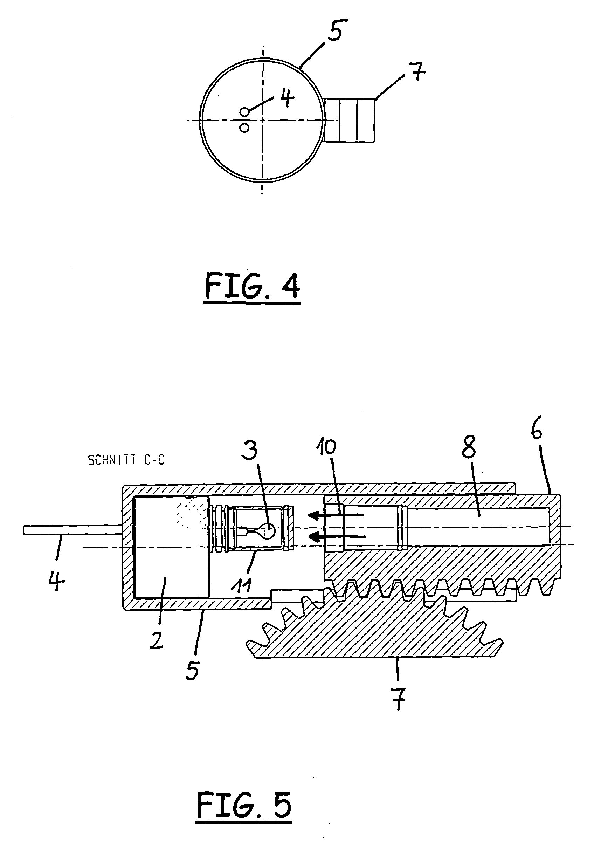

Figur 4 zeigt die Anzündeinheit im Querschnitt.

Figur 5 zeigt die Anzündeinheit 1, kurz nachdem die Zündpille 3 gezündet hat (obwohl sie in Figur 5 noch im intakten Zustand zwecks besserer Übersichtlichkeit dargestellt wurde). Dabei ist erkennbar, daß das Antriebselement 6 sich in Längsrichtung aus dem Gehäuse 5 herausbewegt (und noch weiter herausbewegen wird, wenn die Treibladung in dem Raum 8 vollständig verbrennt), was dadurch erfolgt, daß der Raum 8 eine in Richtung der Zündpille 3 gerichtete Öffnung aufweist und die Verbrennung der Treibladung eine in Richtung der Zündpille 3 gerichtete Rückstoßkraft 10 erzeugt. Diese Rückstoßkraft 10 kann sich dann, nach dem die Zündpille 3 zerstört ist, an dem Grundgehäuse 2 abstützen und in optimaler Weise das Antriebselement 6 aus dem Gehäuse 5 linear herausbewegen. Mit Beginn und während der Verbrennung der Treibladung ist der zu Verfügung stehende Raum für eben diese Verbrennung nur auf den Raum 8 innerhalb des Antriebselementes 6 begrenzt, so daß die dort untergebrachte Treibladung vollständig verbrennen und die Rückstoßkraft 10 erzeugen kann.

Zwecks besserer Darstellbarkeit ist in Figur 5 noch gezeigt, daß die Zündpille 3 von einem Zündpillengehäuse 11 umgeben ist, wobei dieses Zündpillengehäuse 11 (siehe Figur 2) koaxial in dem Raum 8 angeordnet ist.

## Patentansprüche

1. Anzündeinheit (1) für ein Sicherheitssystem, insbesondere ein Airbag oder ein Gurtstraffer, eines Fahrzeuges, mit einer in einem Gehäuse (5) angeordneten Zündpille (3) die nach ihrer Zündung zumindest eine weitere Treibladung zündet, **dadurch gekennzeichnet, daß** die Treibladung derart in einem Raum (8) in dem Gehäuse (5) angeordnet ist, daß sie nach ihrer Zündung eine Rückstoßkraft (10) in Richtung der Zündpille (3) erzeugt.

2. Anzündeinheit (1) nach Anspruch 1, **dadurch gekennzeichnet, daß** die Treibladung in einem Raum (8) eines Antriebselementes (6) in der Anzündeinheit (1) angeordnet ist.

3. Anzündeinheit (1) nach Anspruch 2, **dadurch gekennzeichnet, daß** der in Richtung der Zündpille (3) gerichtete Teil des Raumes (8) einen Verschluß (9) aufweist.

4. Anzündeinheit (1) nach Anspruch 3, **dadurch gekennzeichnet, daß** der Verschluß (9) als Düse ausgebildet ist.

5. Anzündeinheit (1) nach Anspruch 4, **dadurch gekennzeichnet, daß** die Düse eine Lochscheibe ist.

6. Anzündeinheit (1) nach einem der vorhergehenden Ansprüche, **dadurch gekennzeichnet, daß** der in Richtung der Zündpille (3) gerichtete Teil des Raumes (8) als Düse ausgebildet ist.

7. Anzündeinheit (1) nach einem der vorhergehenden Ansprüche, **dadurch gekennzeichnet , daß** sich die Zündpille (3) vor ihrer Zündung ebenfalls in dem Raum (8) befindet.
